# EUROPEAN PATENT APPLICATION

(11) **EP 3 561 744 A1**
(43) Date of publication of application: **30.10.2019**
(21) Application number: 18171805.7
(22) Date of filing: 11.05.2018
(51) Int. Cl.: G06Q 10/04, G06Q 50/02

(54) **SYSTEM FOR REMOTELY MANAGING CONDITION OF PLANTS**

(30) Priority: 23.04.2018 EP 18168730
(71) Applicant: Siemens Aktiengesellschaft, 80333 München (DE)
(72) Inventor: Pott, Philipp, 91077 Neunkirchen am Brand (DE); Hellwig, Hans-Jörg, 91056 Erlangen (DE)

(57) **Abstract**

The present invention relates to an IoT-Cloud system, and more particularly relates to an IoT-Cloud system for managing condition of plants. In one embodiment, a method of managing condition associated with plants comprises receiving data associated with factors affecting condition associated with plants in each geographical area from different sources. The method comprises analyzing the received data associated with the condition associated with the plants using big data analytics algorithms. The method comprises determining condition associated with the plants based on the analysis of received data, and determining one or more actions to be performed for managing the condition associated with the plants. Moreover, the method comprises initiating the one or more actions for managing the condition associated with the plants in the geographical area using one or more control units such that the actions are performed by respective field devices communicatively connected to the control units based on control signals generated by the control units.

## Description

The present invention relates to the field of a system for managing condition of plants, and more particularly relates to a system for remotely managing condition of plants in different geographical areas.

Plants are mainly multi-cellular, predominantly photosynthetic eukaryotes of the kingdom Plantae. Example of plants may include agricultural plants, horticultural plants including grass (e.g., in a garden, field of play, etc.), herbs and so on. Growth of plants depends on various factors such as weather, water, soil, lighting and so on. One need to provide right care to ensure that plants grow as expected. Even then, it may be possible to the plants get affected by a disease or abnormal growth. However, sometimes it's too late to cure the disease, causing damage to the plant. This may cause loss to owner of the plants.

With advancement of technology, different types of sensors are made available to measure various parameters (e.g., soil temperature). However, the sensors are capable of measuring parameters and not predicting damage that these parameters may cause to the plants. Thus, the course of action is determined manually based on individual parameters which may be not effective considering various factors that are responsible for plant growth. Also, a skilled labor is employed to manage the plant growth, which may be a challenging task in certain geographical areas.

In light of the above, there exists a need for remotely managing condition of plants.

Therefore, it is object of the present invention to provide a system for remotely managing condition of plants in different geographical areas.

The object of the present invention is achieved by a method for remotely managing condition of plants within a plurality of geographical areas. Example of plants may include agricultural plants, horticultural plants including grass (e.g., in a garden, field of play, etc.), herbs and so on. The method comprises receiving various types of data associated with factors affecting condition of a plant in each geographical area from different sources (e.g., sensors, user devices, etc.) by a remote system. The factors may be weather conditions, plant disease, soil quality, operating conditions such water sprinkled, fertilizers sprayed, and so on. For instance, the data associated with the condition of the plants may be sensor data (e.g., soil temperature, soil humidity, etc.), image data (e.g., image of plants), experimental data (e.g., current fungal disease), meteorological data (e.g., weather forecast, weather conditions, seasonal fungal attacks, pollen activity), inputs from domain experts and so on. The method further comprises analyzing the received data associated with the condition of the plants using predetermined threshold values. For example, the received data is analyzed using big data analytics algorithms. The method further comprises determining condition associated with the plants in each geographical area based on the analysis of the received data. For example, the condition may be normal condition, abnormal condition, and likely-to-be-abnormal condition (based on prediction). The method may comprise outputting the condition associated with the plants in said each geographical area on a graphical user interface.

The method may comprise determining actions to be performed for managing the condition associated with the plants. For example, the actions to be performed may include watering, spraying fertilizers/pesticides/insecticides/fungicides, soil treatment, UV lighting, and so on. The actions may also include time and quantity associated with said each action. The action may also depend on type of plants grown in the geographical area. The method may also comprise initiating actions to be performed via one or more field devices for managing the condition associated with the plants in the geographical area.

The method may comprise generating a virtual model of the geographical area in which the plants are grown using a digital replica of the geographical area. The method may comprise updating the virtual model of the geographical area in which the plants are grown using the received data.

The method may comprise simulating the virtual model of the geographical area in which the plants are grown using the actions to be performed for managing the condition associated with the plants. Thus, the actions to be performed are validated before performing the same on the plants. Advantageously, invalid actions on the plants are avoided. The method may comprise outputting the results of simulation of the virtual model on a graphical user interface.

The method may comprise determining whether the actions to be performed are valid for managing the condition associated with the plants based on results of the simulation of the virtual model. If the actions to be performed are not valid, the method may comprise re-computing actions to be performed using the results of simulation.

The method may comprise initiating the one or more actions for managing the condition associated with the plants in the geographical area using one or more control devices such that the actions are performed by respective field devices communicatively connected to the control devices based on control signals generated by the control devices.

The method may comprise generating an augmented view of the geographical view superimposed with the condition associated with the plants and the actions to be performed on an augmented reality device.

The method may comprise determining anomalies in the acquired data based on the outcome of analysis. The method may comprise determining whether the anomalies are associated with abnormal growth of one or more plants. If the anomalies are associated with abnormal growth of plants, the method may comprise determining location of each plant whose growth is abnormal. If the anomalies are associated with abnormal growth of plants, the method may comprise determining whether anomalies are indicative of factors that may lead to abnormal growth of one or more plants, and determining location of each plant whose growth is likely to be abnormal. Advantageously, abnormal growth of the plants is predicted beforehand. The prediction of abnormal or normal growth can be visualized on a dedicated application using a user device.

The method may comprise determining a first set of actions to be performed for managing condition associated with the one or more plants having abnormal growth. The method may comprises determining a second set of actions to be performed for managing condition associated with the one or more plants whose growth is likely to abnormal. The method may comprise determining a third set of actions to be performed for managing condition associated with one or more plants whose growth is normal. Each of the actions may be applicable to entire geographical area or specific zones in the geographical area.

The object of the present invention is achieved by an apparatus for managing condition associated with plants in different geographical area. For example, the apparatus may be a cloud platform running on a cloud infrastructure. The apparatus comprises one or more processing units, and a memory unit communicative coupled to the one or more processing units. The memory unit comprises a plant management module stored in the form of machine-readable instructions executable by the one or more processing units. The plant management module is configured to perform method steps described above.

Additionally, the object of the present invention is achieved by a system comprising one or more devices communicatively coupled to the apparatus, each device is capable of providing data associated with condition of plants in a plurality of geographical area. The system also comprises an apparatus described above, the apparatus is configured for determining actions to be performed based on data associated with the condition associated with plants in each of the geographical area. Additionally, the system comprises one or more control devices communicatively coupled to the apparatus, each control device is configured to generate control signals based on the actions to be performed to manage condition associated with plants. The system comprises one or more field devices communicatively coupled to the apparatus, each field device is configured to perform at least one action in the geographical area based on the control signals.

The object of the present invention is achieved by a computer-program product having instructions stored therein, which when executed by a processor, cause the processor to perform a method described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: is a block diagram of an IoT-Cloud system for managing growth of a grass on a field of play such as a soccer field, according to an embodiment of the present invention;
- FIG 1B: is a block diagram of the IoT-Cloud system illustrating devices in a soccer stadium connected to a cloud computing system, according to the embodiment of the present invention;
- FIG 2: is a block diagram of the plant management module of FIG 1, according to the embodiment of the present invention;
- FIG 3: is a process flowchart illustrating an exemplary method of managing growth of grass on the field of play, according to the embodiment of the present invention;
- FIG 4: is a schematic diagram depicting detecting/predicting growth of fungal disease affecting the grass on the field of play, according to the embodiment of the present invention; and
- FIG 5A-E: are graphical user interface views of the user device displaying different actions to be performed on the field of play based on detected growth of grass or predicted growth of grass.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

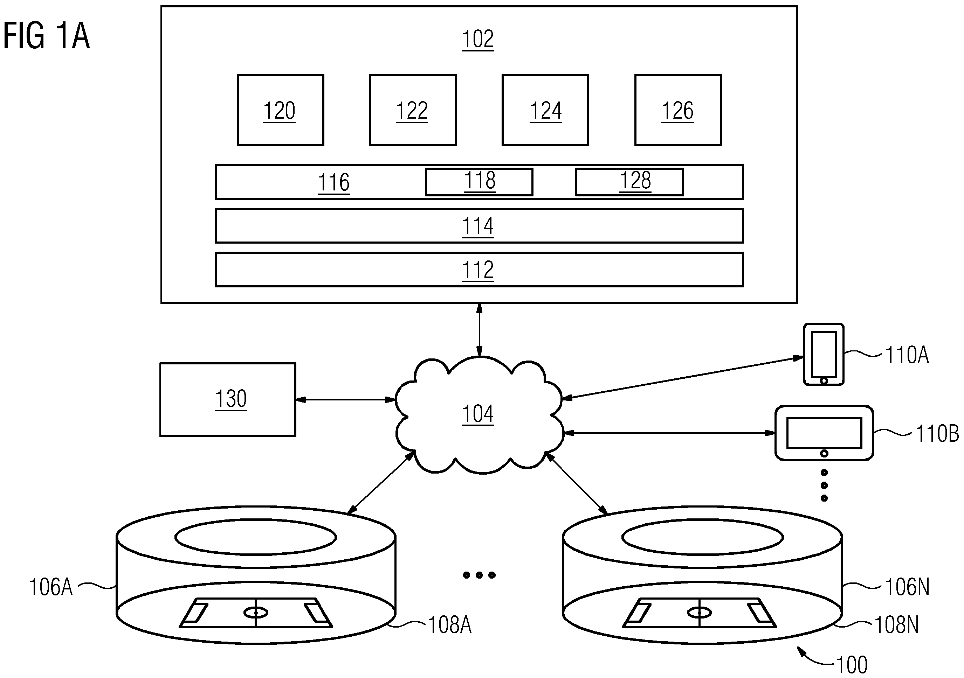

FIG 1A is a block diagram of an IoT-Cloud system 100 for managing growth of a grass on a field of play (e.g., soccer field), according to an embodiment of the present invention. In an exemplary implementation, the present invention is described with reference to the drawings with respect to field of play (e.g., soccer field), wherein the plant refer to grass on the field of play. It can be noted that the field of play is also known as 'pitch', 'sport field', 'playing ground'.

The IoT-Cloud system 100 comprises a cloud computing system 102 connected to a plurality of soccer stadiums (sport arenas) 106A-N via a network 104 (e.g., Internet). The cloud computing system 102 may be remotely located from the soccer stadiums 106A-N. The cloud computing system 102 is configured for growing and maintaining natural grass on soccer fields 108A-N in the respective soccer stadiums 106A-N. In one embodiment, the cloud computing system is configured for remotely managing growth of the grass on the soccer fields 108A-N.

The IoT-Cloud system 100 also comprises user devices 110A and 110B communicatively coupled to the cloud computing system 102 via the network 104. The user devices 110A-B can be a smartphone, tablet computer, laptop computer, wearable device such as smart watch, augmented reality glasses, virtual reality glasses, etc. The user devices 110A-B are capable of accessing the cloud computing system 102 for managing the growth of the grass on the soccer fields 108A-N. The user devices 110A-B are capable of providing experimental data (e.g., grass health diagnostics), expert data, etc. Also, the user devices 110A-B can access different aspects such as current condition of grass, predictive trends in growth of grass, simulation results, actions to be performed, factors influencing growth of grass, growth status for a period of time (days, weeks, months), etc.

The IoT-cloud system 100 also includes data sources 130 communicatively coupled to the cloud computing system 102. The data sources provide different types of data for managing growth of grass on the soccer fields 108A-N. Exemplary data sources 130 may include satellite, meteorological device, etc.

The cloud computing system 102 may be a public cloud, private cloud or a hybrid cloud. The cloud computing system 102 comprises a network interface 112, hardware resources and OS 114, and a cloud platform 116. The network interface 112 enables communication between the cloud computing system 102 and devices for maintaining grass in the soccer fields 108AN. Also, the network interface 112 enables communication between the cloud computing system 102 and the devices 110A-B.

The hardware resources and OS 114 may include one or more servers on which an operating system (OS) is installed. The servers may comprise one or more processing units, one or more storage devices (e.g., memory units) for storing data (e.g., data effecting condition of grass, virtual model data, prediction data, etc.) and machine-readable instructions (e.g., Applications, APIs), and other peripherals required for providing cloud computing functionality.

The cloud platform 116 is a platform which enables functionalities such as data storage, data analysis, model simulation, data visualization, data communication, etc. using the hardware resources and OS 114 for managing the soccer field 108A-N. The cloud platform 116 may comprise a combination of dedicated hardware and software built on top of the hardware and OS 114.

The cloud platform 116 comprises a plant management module 118 capable of managing growth of grass on each of the soccer fields 108A-N which is explained in greater detail in the following description. The plant management module 118 may be stored in the form of machine-readable instructions on storage units and executed by one or more servers. The cloud platform 116 comprises an access control module 128 capable of managing access to soccer field data, dedicated Apps, APIs, simulation models, simulation results, prediction trends, recommendations corresponding to soccer fields to authenticated and authorized tenant users associated with respective soccer stadiums 106A-N using the user devices 110A-B.

The cloud platform 116 also enables to configure artifacts such as Applications (Apps) 120, Application Programming Interfaces (APIs) 122, Virtual models and digital twins 124, and an IoT data store 126 for effectively managing soccer fields 106A-N using the cloud computing system 102. For example, the application 120 may enable a tenant user to access growth parameters associated with grass on the soccer field 108A using the user device 110A. The APIs 122 enable to execution of underlying algorithms for managing growth of grass. For instance, the application 120 invokes visualization API to visualize the growth parameters associated with the soccer field 108A. The virtual models and digital twins 124 are digital representation of the soccer stadiums with real-time conditions. For example, the virtual model 124 help to determine whether a particular action is valid to be performed for stop/prevent abnormal growth of grass on the soccer field 108A. The IoT data store 126 stores data received from various sources, analysis data, prediction trends, simulation results, etc.

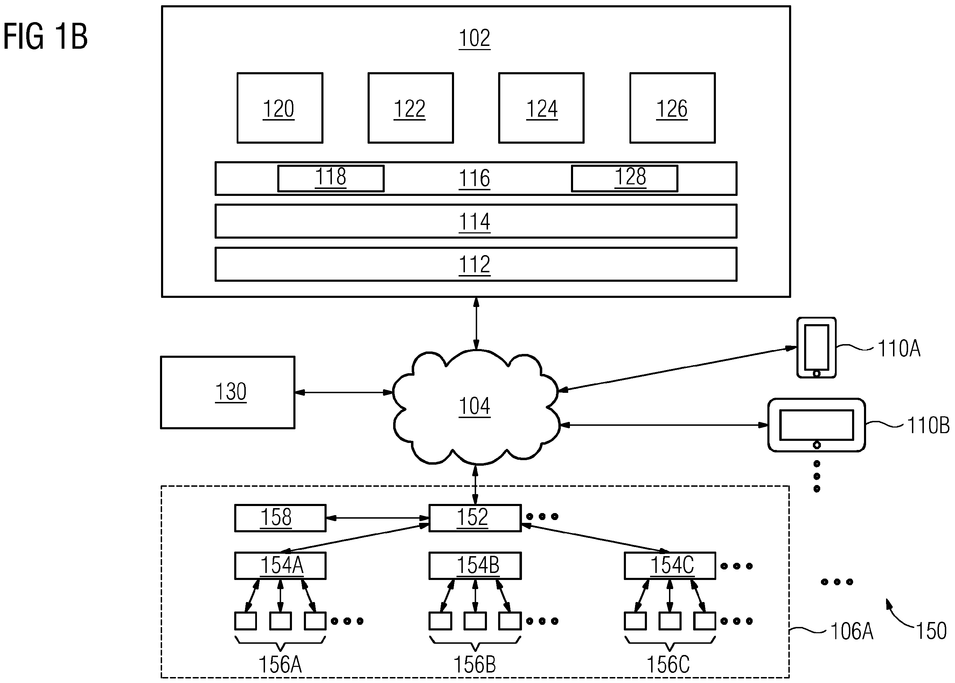

FIG 1B is a block diagram of the IoT-Cloud system 100 illustrating devices in the soccer stadium 106A connected to the cloud computing system 102, according to the embodiment of the present invention. As shown in FIG 1B, the soccer stadium 106A comprises an IoT gateway 152, control devices 154A-C, field devices 156A-C, and sensors 158. The IoT gateway 152 is connected to the cloud computing system via the network 104. The IoT gateway 152 enables communication the cloud computing system 102 and the soccer stadium 106A. The control devices 154A-C are communicatively connected to the IoT gateway 152. The control devices 154A-C may be programmable logic controllers. The field devices 156A, 156B, and 156C are connected to the control devices 154A, 154B, and 154C respectively. The field devices 154A, 154B, 154C may be heating device, ventilation device, water sprinkler, fertilizer sprayer, lawn mower, sweeper, groomers, field stripers, rollers, and so on. The field devices 156A-C may be connected to the control devices 154A-C via wired or wireless means. The sensors 158 may include devices which can measure data such as soil temperature, soil pH, soil humidity, ground humidity, ground temperature and so on. The sensors 158 may be deployed in the soccer field 108A. The sensors 158 are communicative coupled to the IoT gateway 152. The sensors 158 communicate the sensed data to the cloud computing system 102 via the network 104.

The control devices 154A-C receives information on actions to be performed on the soccer field 108A from the cloud computing system 102 via the IoT gateway 152. The actions are determined based on condition of grass on the soccer field 108A, as explained in the description that follows. The control devices 154A-C generates control signals based on the received information. The field devices 156A-C performs desired action on the soccer field 108A based on the control signals issued by the respective control devices 154A-C so that the grass on the soccer field 108A is grown and maintained in healthy state. Additionally, the control devices 154A-C provides feedback on the actions performed to the cloud computing system 102 via the IoT gateway 152. Also, the control devices 154A-C are configured to provide operational data to the cloud computing system 102 via the IoT gateway 152.

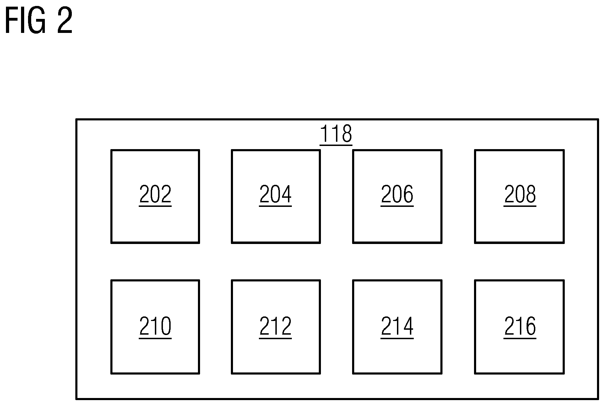

FIG 2 is a block diagram of the plant management module 118 of FIG 1, according to the embodiment of the present invention. As shown in FIG 2, the plant management module 118 comprises a pre-processing module 202, a plant analytics module 204, an anomaly detection module 206, a growth detection module 208, a growth prediction module 210, an action computation module 212, a model simulation module 214, and an augmented reality module 216.

The pre-processing module 202 processes data received from various sources (sensors, cameras, field devices, laboratory, meteorological department, satellite, groundskeeper) connected to the cloud computing system 102. For example, the pre-processing module 202 removes noise, missing values, spikes in the data. The data is associated with factors responsible for growth of grass on a soccer field (e.g., the soccer field 108A). In one embodiment, the data associated with the grass may be factors governing the grass growth such as water, fertilizer, soil quality, weather, weed, patches, grass mowing, soil humidity, soil pH, soccer game, and so on. For example, the data may be sensor data, image data, experimental data, operational data, metrological data, etc. For example, the sensor data may be data obtained from the sensors 158 connected to the cloud computing system 102 via the IoT gateway 152. The sensor data may include luminosity data, dampness data, ground temperature data, ground humidity data, soil pH data, soil moisture data, salinity data, and so on. The operational data can be data obtained from the control devices 154A-C. The operational data may include time and luminosity of light, amount and time of water sprinkled, amount, type and time at which fertilizer/pesticide/insecticide/fungicide sprayed, time and size of grass mowed, game schedule and so on. The experimental data may include soil diagnostics data, grass diagnostics data, and so on. The image data may include data of field captured by on-field cameras or satellite camera. The image data may be data indicating weed growth, patches, density of grass and so on. The metrological data may include data associated with weather combined with seasonal diseases. For example, the metrological data may include current weather condition, weather forecast for next 72 hours, seasonal fungal attacks that can occur in such a weather condition, etc.

The plant analytics module 204 is configured to analyze the pre-processed data based on pre-determined threshold values. The plant analytics module 204 may analyze the pre-processed data using big data analytics algorithms deployed on the cloud platform 116. The anomaly detection module 206 is configured to detect anomalies in the received data using anomaly detection algorithms deployed on the cloud platform 116. The anomaly may be associated with parameters which are responsible abnormal growth of grass. Exemplary parameters may include low soil temperature, bad weather conditions such as heavy snowfall, high humidity, fungal disease, poor ventilation, etc.

The growth detector module 208 is configured to detect abnormal growth of grass on the soccer field 108A based on the detected anomalies. In one embodiment, the growth detector module 208 is configured to detect abnormal growth of grass such as negative growth of grass or no growth of grass. In another embodiment, the growth detector module 208 is also configured to detect positive growth of grass based on previously analyzed data of the grass in case no anomalies are detected. It may happen that some areas of soccer field 108A have positive growth of grass and other areas of soccer field 108A have negative or no growth of grass. The soccer field 108A is divided into multiple zones. Accordingly, the growth detector module 208 is configured to detect growth of grass in each of these zones. The growth detector module 208 may use a plurality of growth detection algorithms based on parameters (e.g., fungal disease) that can affect growth of the grass and anomalies associated with such parameters. For example, the growth detector module 208 may use growth detection algorithm for a specific type of fungal disease. In such case, the growth detection algorithms can determine if there is a positive growth of fungus, negative growth of fungus or growth of fungus is stopped based on the actions (e.g., UV lighting) already performed to cure the fungal disease.

The growth predictor module 210 is configured to predict growth of grass on the soccer field 108A based on the detected anomalies. In one embodiment, the growth predictor module 210 is configured to predict abnormal growth of grass such as negative growth of grass or no growth of grass. In another embodiment, the growth predictor module 210 is configured to predict positive growth of grass based on previously analyzed data of the grass in case no anomalies are detected. In above embodiments, the growth predictor module 210 is configured to predict growth of grass in each zone of the soccer field 108A. The growth predictor module 210 may use a plurality of growth prediction algorithms based on parameters (e.g., fungal disease) that may affect growth of the grass and anomalies associated with such parameters. For example, the growth predictor module 210 may use growth prediction algorithms for a specific type of fungal disease. In such case, the growth prediction algorithm would determine if there is likelihood of positive growth of fungus, negative growth of fungus or no growth of fungus based on current condition of the fungal disease.

The action computation module 212 is configured to determine actions to be performed on the soccer field 108A to manage growth of grass on the soccer field 108A based on condition (e.g., positive growth of fungal disease, negative growth of fungal disease, growth stop of fungal disease) of the grass on the soccer field 108A. For example, the actions may include increase ventilation, start UV lighting, spray fungicides, etc. to cure the grass affected from fungal disease. The action computation module 212 considers local regulations when computing the action. For example, use of UV lighting may be preferred over spraying of fungicides especially where regulatory restrictions on the maximum usage of fungicides apply such as for soccer fields in Germany.

The model simulation module 214 is configured to update a virtual model of the soccer field 108A with the received data. The model simulation module 214 is also configured to simulate the virtual model of the soccer field 108A using the determined actions. The model simulation module 214 is configured to output results of simulation of the virtual model of the soccer field 108A on a graphical user interface of the user devices 110A-B. In some embodiments, the model simulation module 214 is configured to generate a virtual model of the soccer field 108A using a digital replica of the soccer field 108A and real factors affecting growth of grass. It can be noted that if the model simulation module 214 determines that one or more actions are not valid, then the action computation module 212 is configured to compute the one or more action based on the results of simulation. For example, if the simulation results indicate that UV lighting for a specific period of time would not result in controlling growth of fungus, then the action computation module 212 computes whether UV lighting has to be increased in quantity and time or whether any other actions are needed to control the fungal disease.

The augmented reality module 216 is configured to generate an augmented view of the soccer field 108A superimposed with the condition of the grass and the actions to be performed on the soccer field 108A on the user device with augmented reality capability. For example, the augmented view may display a multi-dimensional view of the soccer field 108A or grass along with information such as type of fungal disease, state of fungal disease, actions performed, predicted growth of fungal disease and so on.

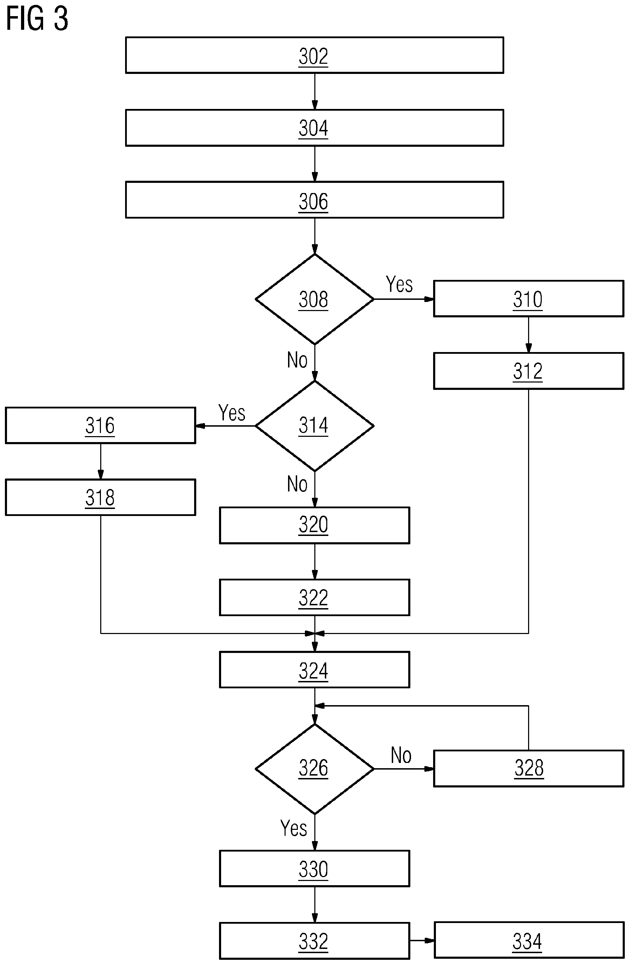

FIG 3 is a process flowchart 300 illustrating an exemplary method of managing growth of grass on the soccer field 108A, according to the embodiment of the present invention. At step 302, data associated with grass grown in the soccer field 108A is collected from various sources (e.g., sensors, cameras, laboratory, domain experts, satellite, etc). At step 304, the data associated with the grass grown in the soccer field 108A is pre-processed. For example, pre-processing may involve removing noise, missing values, spikes, and redundant values from the data. At step 306, the pre-processed data is analyzed based on threshold values using analytics algorithms such as big data analytics algorithms. The pre-determined threshold values may be values computed based on results of past analysis of data. Alternatively, the threshold values may be values predetermined to achieve normal growth of grass.

At step 308, it is determined whether there are anomalies in the pre-processed data which are associated with abnormal growth of the grass based on result of analysis. Abnormal growth of grass refers to negative growth or no growth of grass. For example, the abnormal growth of grass may be due fungal attack which is indicated by an anomaly associated with experimental data related to grass health diagnostics. In some embodiments, various growth detector algorithms (e.g., negative growth detector, growth stop detector, etc.) are used to determine growth of fungus causing the fungal disease. If there are anomalies associated abnormal grass growth, then at step 310, location of abnormal grass growth on the soccer field 108A is identified. In some embodiments, the soccer field 108A may be divided into zones. In these embodiments, the location of abnormal grass growth would be zones in which grass growth is abnormal. This is determined by associating the data collected from the zone with the zone ID. In other embodiments, the location can be determined based on Global Positioning System (GPS) coordinates of grass in the soccer field 108A whose growth is abnormal. At step 312, a first set of actions to be performed to stop abnormal growth of grass is computed. The first set of actions may be generated using an artificial intelligence model built and trained based on knowledge gathered from domain experts (groundskeeper, biologist, weather experts, etc.) and other data such as historical data, statistical data, etc. The first set of actions may indicate spraying of certain type and amount of fungicides for certain time, UV lighting, increase in ventilation, remove the weed, etc.

If there no anomalies associated with the abnormal growth of grass, then at step 314, it is determined whether there are anomalies which indicate factors that may lead to abnormal growth of grass. These are the anomalies which help in predicting abnormal growth of grass on the soccer field 108A. The prediction on abnormality is carried out using growth prediction algorithms. For example, the growth prediction algorithms may be negative growth prediction algorithms and no growth prediction algorithms. Several types of growth prediction algorithms can be deployed to determine abnormal growth prediction based on different factors. The factors may be insufficient light, insufficient ventilation, rainfall/snowfall, bad weather forecast, upcoming game, and so on. If there are anomalies resulting in abnormal growth of grass, then at step 316, locations of the grass on the soccer field 108A which has abnormal growth is determined. As explained above, the locations can be determined based on zones corresponding to the pre-processed data associated with the grass or based on GPS coordinates. At step 318, a second set of actions to be performed to prevent occurrence of abnormal growth of grass on the soccer field 108A and to resolve the factors that may lead to abnormal growth of grass is determined. The set of actions may be to cover soccer field 108A during certain time, spray pesticides/fertilizer/fungicides for certain zones, heating for certain zone till soil temperature is X°C, etc. The second set of actions may also consider forecast data such a game schedule, weather forecast, irrigation schedule and so on. Accordingly, the second set of actions is scheduled to be performed.

If there are no anomalies which may result in abnormal growth of grass, then at step 320, a third set of actions to be performed to continue normal growth (positive growth) of grass on the soccer field 108A is determined. In case there are no anomalies, it is determined whether there is positive growth of grass from previous condition. In some embodiments, the third set of actions may be computed based on standard operating procedure or groundskeeper manual. The third set of actions may be start watering for certain time, start lighting at certain time, etc. The third set of actions is performed to keep the grass growth in normal conditions or health condition. The third set of conditions may also consider future events such as weather forecast and upcoming games. The third set of actions is scheduled according to the forecast data. For example, the standard maintenance procedure mentions that watering shall be carried out at 6:30pm every day for one hour. However, if there is a game scheduled from 6pm to 8pm. The third set of actions is determined such that the watering activity would be started after 10pm or so. Similarly, if the rainfall is forecasted, then the watering activity may be deferred or cancelled.

At step 322, a virtual model of the soccer field 108A is updated using the collected data. The virtual model is created using a digital replica of the soccer field 108A. The digital replica represents real conditions associated with the soccer field 108A including but not limited to size of grass, current weather conditions, and so on. The digital replica is also known as digital twins or digital companions. The virtual model helps to optimize the growth of grass in the soccer field 108A by confirming that valid actions are performed on the soccer field 108A for positive grass growth.

At step 324, the virtual model of the soccer field 108A is simulated using the first set of actions, the second set of actions and/or the third set of actions. At step 326, it is determined whether the first set of actions, the second set of actions, and/or the third set of actions can be performed at respective locations of the grass based on the results of simulation of the virtual model of the soccer field 108A. If any of the first set of actions, the second set of actions, and/or third set of actions are determined as not valid (e.g., erroneous), then at step 328, the set of actions are recomputed and the simulation of the virtual model is repeated.

If any of the first set of actions, the second set of actions, and/or third set of actions are determined as valid, then at 330, the control devices 154A-C configured to initiate the first set of actions, the second set of actions, and/or third set of actions are determined. The control devices 154A-C are determined based on the location of the grass where the action needs to be performed. At step 328, the information associated with the first set of actions, the second set of actions and the third set of actions is sent to the respective control devices 154A-C over the network 104. At step 332, the respective control devices 154A-C generate control signals to perform a desired action.

At step 334, the respective control devices 154A-C send the control signal to associated field devices 156A-C responsible for performing the action at scheduled time. The field devices 156A-C are connected to the control devices 154A-C via wired or wireless interface. At step 336, each of the field devices 156A-C performs the desired action based on the received control signal. The action may be initiation of ventilation, heating, UV lighting, spraying fungicides, watering, mowing, and the like. In some embodiments, some actions may require to be initiated and monitored by ground staff (e.g., groundskeeper). In such case, the cloud computing system 102 sends the information regarding the action to be performed to a user device 110A associated with the groundskeeper via the network 104. Accordingly, the groundskeeper may perform the action based on the instructions received from the cloud computing system 102. For example, the operator may get instructions to fill patches (damaged grass) at certain locations on the soccer field 108A with new grass with location information.

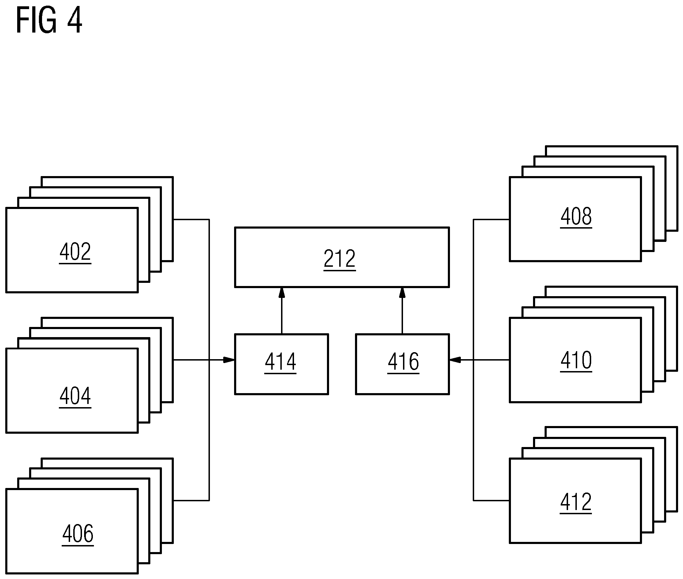

FIG 4 is a schematic diagram 400 depicting detecting/predicting growth of fungal disease affecting the grass on the soccer field 108A, according to the embodiment of the present invention. As shown in FIG 4, the plant management module 118 may use a plurality of growth detectors 402A-N, 404A-N, and 406A-N and a plurality of growth predictors 408A-N, 410A-N, and 412A-N. The growth detector module 208 may comprise an accumulated growth calculator 414. Similarly, the growth predictor module 210 may comprise an accumulated prediction calculator 416.

The growth detectors 402A-N, 404A-N, and 406A-N may be positive growth detectors, negative growth detectors, and growth stop detectors respectively. For example, each growth detector is configured to determine status of fungal disease associated with the grass. For example, the positive growth detector may determine positive growth of the fungus. The positive growth means that the fungal disease is grown from previous point in time (previous analysis). The negative growth detector may detect negative growth of the fungus. For example, the fungus may undergo negative growth when ambient temperature falls below 0°C. The growth stop detector may detect that the growth of fungus has stopped. It is possible to deploy multiple growth detectors corresponding to each type of fungal disease and each type of sensor.

Similarly, the growth predictors 408A-N, 410A-N, and 412A-N may be positive growth predictors, negative growth predictors, and growth stop predictors. For example, each growth predictor is configured to predict growth of fungal disease. For example, the positive growth predictor may predict positive growth of the fungus. The negative growth predictor may predict negative growth of the fungus when ambient temperature is likely to fall below 0°C. The growth stop predictor may predict that the growth of fungus would stop in coming days. It can be noted that, it is possible to deploy multiple growth predictor corresponding to each type of fungal disease and each type of sensor.

Based on the analysis of the received data, the growth detectors 402A-N, 404A-N, 406A-N may provide growth status of fungal disease to the accumulated growth calculator 414. Similarly, the growth predictors 408A-N, 410A-N, and 412A-N may provide predicted growth of fungal disease to the accumulated prediction calculator 416. Accordingly, the accumulated growth calculator 414 and the accumulated prediction calculator 416 provide accumulated values to the action computation module 212. The action computation module 212 computes a set of actions to be performed on the soccer field 108A to achieve normal growth of grass based on the accumulated growth and prediction values. For example, if the positive growth is detected or predicted than UV lighting is determined as action to be performed to stop growth of fungal disease. Additionally, a predictive trend of fungal growth can be visualized on a graphical user interface of the user device 110A.

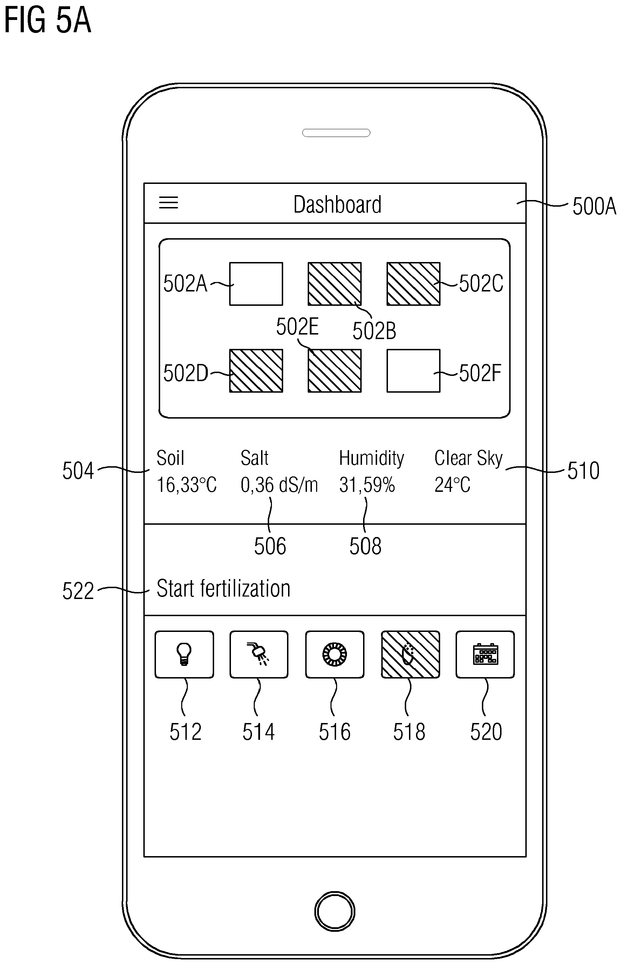

FIG 5A-E are graphical user interface views 500A-E of the user device 110A displaying different actions to be performed on the soccer field 108A based on detected growth of grass or predicted growth of grass. FIG 5A illustrates a graphical user interface view 500A displaying different zones 502A-F of the soccer field 108A. Also, the graphical user interface view 500A shows soil temperature 504, salt content 506, humidity 508, and weather condition 510. For example, the graphical user interface view 500A displays soil temperature 504 as 16,33°C, salt content 506 as 0,36dS/m, humidity 508 as 31,59% and weather condition 510 as clear sky and 24°C. The graphical interface view 500A also shows different control buttons viz, lighting button 512, watering button 514, ventilation button 516, fertilization button 518 and heating button 520. Based on the analysis of the collected data, the graphical user interface view 500A displays next action 522 to performed at zones 502B, 502C, 502D and 502E as 'fertilization'. Upon touching the fertilization button 518, a control device may issue a control signal to start fertilization to fertilization devices associated with zones 502B, 502C, 502D, and 502E simultaneously or in sequential manner. Accordingly, the fertilization devices would start spraying fertilizers in the zones 502B, 502C, 502D, and 502E.

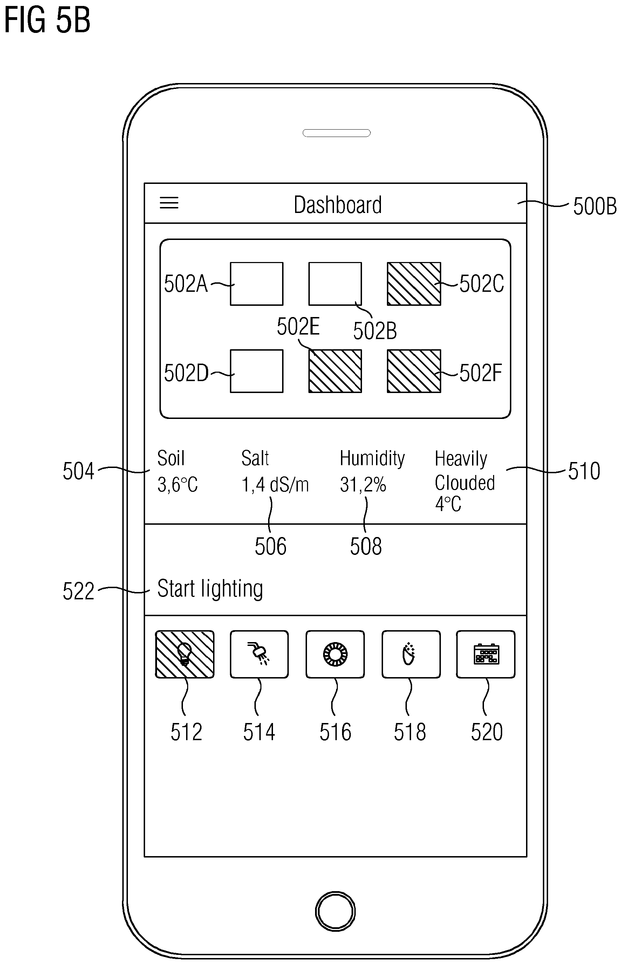

As shown in FIG 5B, the graphical user interface view 500B displays soil temperature 504 as 3,6°C, salt content 506 as 1,4dS/m, humidity 508 as 31,2% and weather condition 510 as cloudy and 4°C. Based on the analysis of the collected data, the graphical user interface view 500B displays next action to performed at zones 502C, 502E and 502F as 'lighting'. Upon touching the lighting button 512, a control device in the soccer field 108A may issue a control signal to start lighting to lighting devices associated with zones 502C, 502E, and 502F simultaneously or in sequential manner. Accordingly, the lighting devices would switch-on lights in the zones 502C, 502E, and 502F.

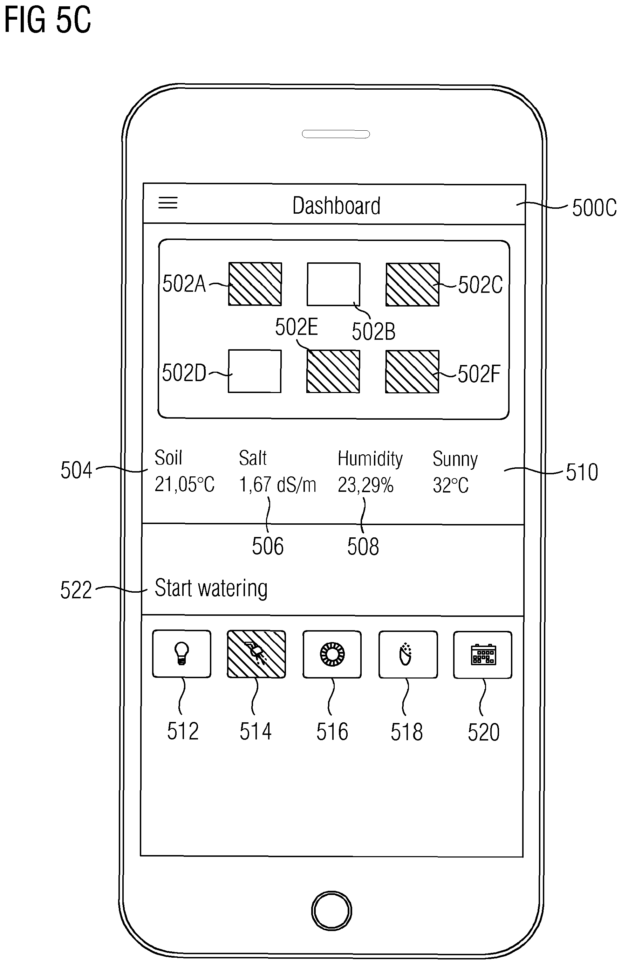

As shown in FIG 5C, the graphical user interface view 500C displays soil temperature 504 as 21,05°C, salt content 506 as 1,67dS/m, humidity 508 as 23,29% and weather condition 510 as Sunny and 32°C. Based on the analysis of the collected data, the graphical user interface view 500C displays next action to performed at zones 502A, 502C, 502E and 502F as 'watering'. Upon touching the watering button 514, a control device in the soccer field 108A may issue a control signal to start watering to water sprinklers associated with zones 502A, 502C, 502E, and 502F simultaneously or in sequential manner. Accordingly, the water sprinklers would start sprinkling water in the zones 502A, 502C, 502E, and 502F.

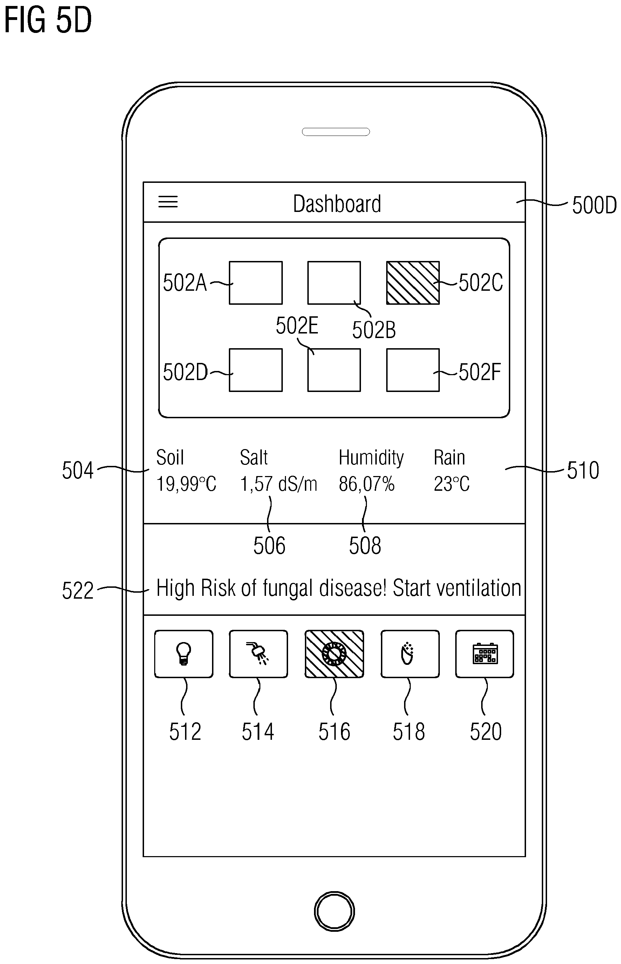

As shown in FIG 5D, the graphical user interface view 500D displays soil temperature 504 as 19,99°C, salt content 506 as 1,57dS/m, humidity 508 as 86,07% and weather condition 510 as Sunny and 23°C. Based on the analysis of the collected data, the graphical user interface view 500D displays next action to performed at zone 502C as 'ventilation' as high risk of grass being infected by fungal disease is predicted by the positive growth predictors 408. Upon touching the ventilation button 516, a control device in the soccer field 108A may issue a control signal to start ventilation to ventilation device associated with zones 502C. Accordingly, the ventilation device would start ventilation in the zone 502C.

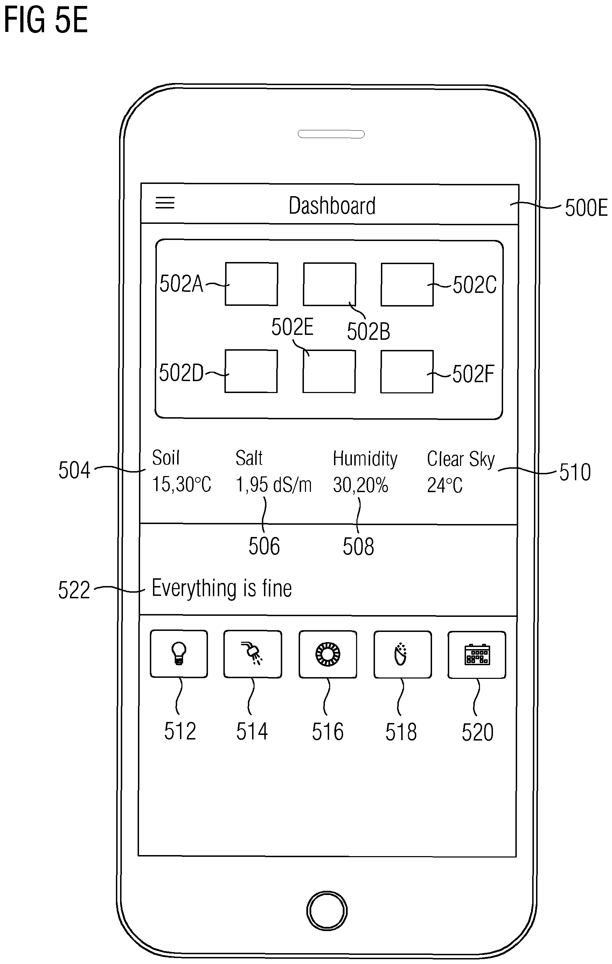

As shown in FIG 5E, the graphical user interface view 500E displays soil temperature 504 as 15,30°C, salt content 506 as 1,95dS/m, humidity 508 as 30,20% and weather condition 510 as Clear sky and 24°C. Based on the analysis of the collected data, the graphical user interface view 500E displays that growth of grass is normal and no action is required to be performed at this point. Accordingly, no action is performed on the soccer field 108A.

According to various embodiments, the IoT-cloud system 100 enables remotely managing plants in various geographical locations. The cloud computing system 102 is capable of configuring sensors in each geographical area, monitor multi-dimensional parameters associated with plants in each geographical area, and consider collaborative inputs from different organizations (Laboratories, Universities, Greenkeeper, horticulturist, etc.) to detect, predict and control abnormal growth of plants. Additionally, the IoT-cloud system 100 is capable of remotely monitoring ultraviolet lighting used for plant growth including monitoring of duration of light exposure, power consumption, lighting intensity, position dependent lighting. This is achieved by determining recommendations for lighting precision and lighting intensity along with other actions such as exposure to sunlight, intensity of irrigation, fungal growth and so on. The IoT-cloud system 100 is capable of remote monitoring of fertilization by documenting fertilization actions, receiving feedback on soil parameters using sensors and from laboratories and monitoring statutory threshold values considering other parameters including exposure to sunlight, fungal growth, etc. Furthermore, the IoT-cloud system 100 is capable of remote monitoring of irrigation to the plants by systematically documenting irrigation actions, processing feedback on soil humidity received from sensors, and monitoring threshold values depending on other parameters such as exposure to sunlight, fungal growth, etc. Moreover, the IoT-cloud system 100 is capable of optimizing ventilation provided to plants by monitoring soil humidity, temperature, oxygen content and providing recommendations to activate soil ventilation with location and time information. Also, the IoT-cloud system 100 is capable of managing plant disease by monitoring and analyzing multi-dimensional parameters received from sensors and from other sources, visualizing critical growth key performance indicators derived using analytics algorithms such as trend prediction algorithm, anomaly detection algorithm and correlation analysis algorithm. Advantageously, by use of the IoT-cloud system 100, efficiency may be adapted continuously to a given situation and cost on power consumption, water, fungicides, etc. may be significantly reduced over a period of time.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method of remotely managing condition associated with plants in a plurality of geographical areas, the method comprising:
receiving data associated with factors affecting condition of plants in each geographical area from different sources;
analyzing the received data associated with the condition of the plants in said each geographical area based on pre-determined threshold values;
determining condition associated with the plants in said each geographical area based on the analysis of the received data; and
outputting the condition associated with the plants in said each geographical area on a graphical user interface.

2. The method according to claim 1, further comprising:
determining one or more actions to be performed for managing the condition associated with the plants in said each geographical area.

3. The method according to claim 1, wherein determining the condition associated with the plants comprises:
determining anomalies in the received data based on the outcome of analysis;
determining whether the anomalies are associated with abnormal growth of one or more plants;
if the anomalies are associated with abnormal growth of plants, determining location of each plant whose growth is abnormal;
if the anomalies are associated with abnormal growth of plants, determining whether anomalies are indicative of factors that may lead to abnormal growth of one or more plants; and
determining location of each plant whose growth is likely to be abnormal.

4. The method according to claim 2 or 3, wherein determining the one or more actions to be performed for managing the condition associated with the plants comprises:
determining a first set of actions to be performed for managing condition associated with the one or more plants having abnormal growth.

5. The method according to claim 2 or 3, wherein determining the one or more actions to be performed for managing the condition associated with the plants comprises:
determining a second set of actions to be performed for managing condition associated with the one or more plants whose growth is likely to abnormal.

6. The method according to claim 2 or 3, wherein determining the one or more actions to be performed for managing the condition associated with the plants comprises:
determining a third set of actions to be performed for managing condition associated with one or more plants whose growth is normal.

7. The method according to claim 1, further comprising:
generating a virtual model of the geographical area in which the plants are grown using a digital replica of the geographical area.

8. The method according to claim 1 or 7, further comprising:
updating the virtual model of the geographical area in which the plants are grown using received data.

9. The method according to any of the claims 1 to 7, further comprising:
simulating the virtual model of the geographical area in which the plants are grown using the actions to be performed for managing the condition of the plants; and
outputting the results of simulation of the virtual model on a graphical user interface.

10. The method according to claim 9, further comprising:
determining whether the actions to be performed are valid for managing the condition of the plants based on results of the simulation of the virtual model; and
if the actions to be performed are not valid, re-computing actions to be performed using the results of simulation.

11. The method according to claim 2 or 10, further comprising:
initiating the one or more actions for managing the condition associated with the plants in the geographical area using one or more control units, wherein the actions are performed by respective field devices communicatively connected to the control units based on control signals generated by the control units.

12. The method according to claim 1 or 2, further comprising:
generating an augmented view of the geographical area superimposed with the condition associated with the plants and the actions to be performed on an augmented reality device.

13. An apparatus for managing condition of plants in different geographical area comprising:
one or more processing units;
a memory unit communicative coupled to the one or more processing units, wherein the memory unit comprises a plant management module stored in the form of machine-readable instructions executable by the one or more processing units, wherein the plant management module is configured to perform method steps according to claims 1 to 12.

14. A system comprising:
one or more devices capable of providing data associated with condition of plants in a plurality of geographical area;
an apparatus communicatively coupled to the devices according to claim 13, wherein the apparatus is configured for determining actions to be performed based on the data associated with the condition of plants in each geographical area;
one or more control devices communicatively coupled to the apparatus, wherein each control device is configured to generate control signals based on the actions to be performed in said each geographical area to manage condition of plants; and
one or more field devices communicatively coupled to the apparatus, each field device is configured to perform at least one action in said each geographical area based on the control signals.

15. A computer-program product having machine-readable instructions stored therein, which when executed by a processor, cause the processor to perform a method according to claims 1 to 12.
